(19) Europäisches Patentamt
European Patent Office
Office européen des brevets

(11) EP 4 786 434 A1

# (12) EUROPEAN PATENT APPLICATION
published in accordance with Art. 153(4) EPC

(43) Date of publication:
**05.08.2026 Bulletin 2026/32**

(21) Application number: **24872559.0**

(22) Date of filing: **27.09.2024**

(51) International Patent Classification (IPC):
***C03C 27/12*** (2006.01) ***B32B 17/10*** (2006.01)
***B32B 27/18*** (2006.01) ***C08J 5/18*** (2006.01)
***C08K 5/34*** (2006.01) ***C08K 5/3475*** (2006.01)
***C08K 5/3492*** (2006.01) ***C08K 5/54*** (2006.01)
***C08L 23/08*** (2025.01) ***C08L 23/26*** (2025.01)
***C08L 53/02*** (2006.01) ***C08L 101/02*** (2006.01)

(52) Cooperative Patent Classification (CPC):
**B32B 17/00; B32B 17/10; B32B 27/18; C08J 5/18; C08K 5/34; C08K 5/3475; C08K 5/3492; C08K 5/54; C08L 23/08; C08L 23/26; C08L 53/02; C08L 101/02**

(86) International application number:
**PCT/JP2024/034795**

(87) International publication number:
**WO 2025/070778 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023 JP 2023170898**
**29.09.2023 JP 2023170899**
**31.05.2024 JP 2024089519**
**31.05.2024 JP 2024089520**

(71) Applicant: **Sekisui Chemical Co., Ltd.**
**Osaka-shi, Osaka 530-8565 (JP)**

(72) Inventors:
- **NOHARA, Atsushi**
**Suzhou-shi, Jiangsu 215129 (CN)**
- **TAKAHASHI, Yuuma**
**Dallas, Texas 75234 (US)**
- **YAMAZAKI, Koshi**
**Koka-shi, Shiga 528-8585 (JP)**
- **YAMAMOTO, Yuuki**
**Koka-shi, Shiga 528-8585 (JP)**
- **SAITOU, Ryouta**
**Koka-shi, Shiga 528-8585 (JP)**

(74) Representative: **Osha BWB**
**2, rue de la Paix**
**75002 Paris (FR)**

## (54) INTERLAYER FILM, LAMINATE, AND METHOD FOR PRODUCING INTERLAYER FILM

(57) This interlayer film contains an ionomer resin and an ultraviolet absorber, ultraviolet absorber being at least one compound selected from the group consisting of compounds having a benzotriazole structure represented by formula (I) and compounds having a triazine structure. The present invention makes it possible to provide an interlayer film containing an ionomer resin, said film having little coloration while suppressing ultraviolet transmittance. (In the formula, $R_1$ is an organic group having 4 or more carbon atoms, and $R_2$-$R_8$ are each independently a hydrogen atom, a halogen atom, or an organic group having 1-20 carbon atoms.)

EP 4 786 434 A1

## Description

TECHNICAL FIELD

The present invention relates to an interlayer film, a laminate, and a method for producing an interlayer film.

BACKGROUND ART

Laminated glass is safe because it breaks upon external impact without scattering into shards of glass, and is therefore widely used as windowpanes, for example, in buildings as well as in a variety of vehicles, such as automobiles, railway vehicles, aircraft, and ships. It is well known that laminated glass is commonly an integrated structure comprising a laminated glass interlayer composed of a thermoplastic resin, for example, interposed between a pair of glass panels. When used in buildings, laminated glass may also be employed in glass floors or curtain walls, for example, in addition to windowpanes. In these applications, the laminated glass may sometimes be large-scale and used as structural glazing.

Ionomer resins have sometimes been conventionally used in interlayer films for laminated glass. Known ionomer resins that are used in interlayer films for laminated glass include ethylene-unsaturated carboxylic acid-based copolymers, such as ethylene-(meth)acrylic acid-based copolymers, wherein at least some of the side chain carboxyl groups are cross-linked between molecular chains by metal cations (see, for example, Patent Documents 1 to 3).

PRIOR ART DOCUMENTS

PATENT DOCUMENTS

Patent Document 1: WO 2021/002326
Patent Document 2: Japanese Unexamined Patent Application 2022-120218
Patent Document 3: Japanese Unexamined Patent Application 2019-77582

SUMMARY OF THE INVENTION

Problem to be Solved by the Invention

As ionomer resins do not commonly absorb ultraviolet rays, an ultraviolet absorber must be included when attempting to lower the ultraviolet transmittance of ionomer resin-containing interlayer films. Examples in which ultraviolet absorbers have been blended in ionomer resins are disclosed in the examples of Patent Documents 1 to 3.

However, research by the inventors has shown that the addition of ultraviolet absorbers to ionomer resin-containing interlayer films may potentially lead to the discoloration of the interlayer films and thus an unattractive appearance.

An object of the present invention is thus to provide an ionomer resin-containing interlayer film in which the ultraviolet transmittance has been reduced, resulting in less discoloration.

Means for Solving Problem

As a result of extensive research, the inventors perfected the present invention upon discovering that the above problem can be overcome by an interlayer film comprising: an ionomer resin; and at least one ultraviolet absorber selected from the group consisting of compounds having a benzotriazole structure represented by the following formula (I) and compounds having a triazine structure. The present invention is summarized below.

[1] An interlayer film comprising an ionomer resin and an ultraviolet absorber, wherein the ultraviolet absorber is at least one selected from the group consisting of compounds having a benzotriazole structure represented by the following formula (I) and compounds having a triazine structure:

[Chemical Formula 1]

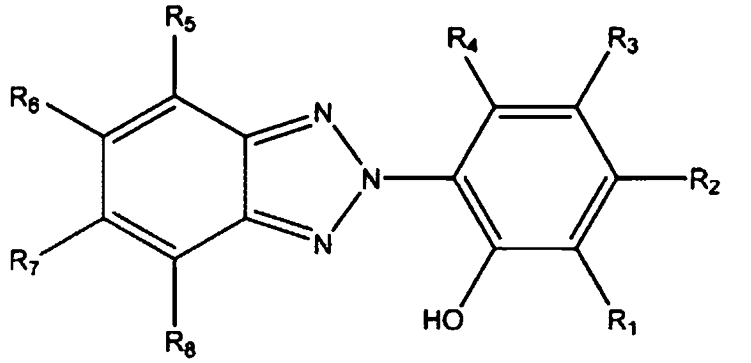

(I)

(in the above formula, $R_1$ is a C4 or higher organic group, and $R_2$ to $R_8$ are each independently a hydrogen atom, a halogen atom, or a C1-20 organic group)

[2] The interlayer film according to [1], wherein the compounds having a benzotriazole structure are any of compounds represented by formulas (2) to (4) below:

[Chemical Formula 2]

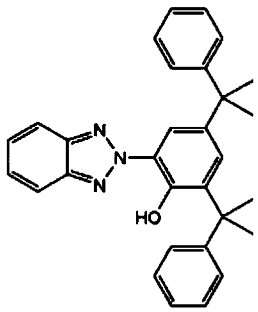

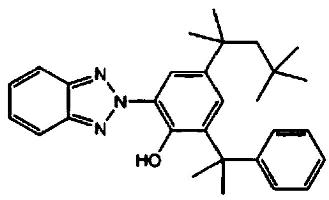

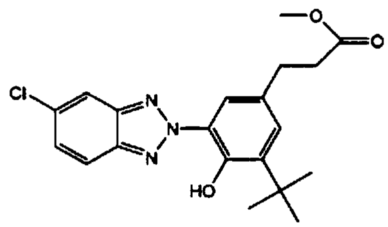

Formula (2) Formula (3) Formula (4)

[3] The interlayer film according to [1] or [2], wherein the content of the ultraviolet absorber is 0.01 to 1 part by mass per 100 parts by mass ionomer resin.

[4] The interlayer film according to any of [1] to [3], wherein the ionomer resin comprises at least one of magnesium or zinc.

[5] The interlayer film according to any of [1] to [4], comprising a silane coupling agent.

[6] The interlayer film according to [5], wherein the silane coupling agent is an epoxy group-having silane coupling agent.

[7] The interlayer film according to [5], comprising 0.01 to 0.5% by mass silane coupling agent per 100% by mass total interlayer film.

[8] The interlayer film according to any of [1] to [7], which is used as an encapsulating material for photovoltaic solar cells.

[9] A resin composition comprising an ionomer resin and an ultraviolet absorber, wherein the ultraviolet absorber is at least one selected from the group consisting of compounds having a benzotriazole structure represented by the following formula (I) and compounds having a triazine structure:

[Chemical Formula 3]

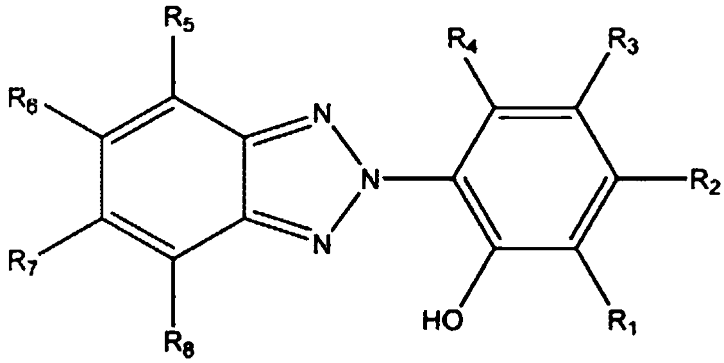

(I)

(in the above formula, $R_1$ is a C4 or higher organic group, and $R_2$ to $R_8$ are each independently a hydrogen atom, a halogen atom, or a C1-20 organic group)

[10] The resin composition according to [9], wherein the compounds having a benzotriazole structure are any of compounds represented by formulas (2) to (4) below:

[Chemical Formula 4]

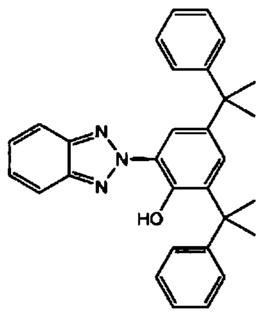

Formula (2)

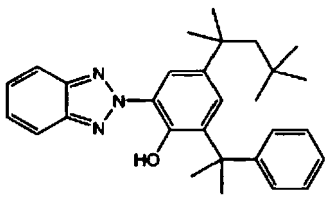

Formula (3)

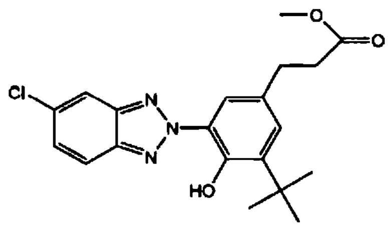

Formula (4)

[11] The resin composition according to [9] or [10], which is obtained by kneading a mixture of an ionomer resin, the ultraviolet absorber, and an ethylene-(meth)acrylic acid-based copolymer.

[12] A laminate comprising the interlayer film according to any of [1] to [8], and a pair of substrates, wherein the interlayer film is disposed between the pair of substrates.

[13] The laminate according to [12], wherein the substrates are substrates selected from the group consisting of organic material substrates and inorganic material substrates.

[14] The laminate according to [12] or [13], which is laminated glass.

[15] The laminate according to [12] or [13], which is laminated glass for a building structure.

[16] A display comprising the laminate according to [12] or [13].

[17] A photovoltaic solar cell comprising the laminate according to [12] or [13].

[18] A method for producing the interlayer film according to any of [1] to [8], comprising:

a step in which a mixture of an ionomer resin, an ultraviolet absorber, and an ethylene-(meth)acrylic acid-based copolymer is kneaded to obtain a resin composition; and

a step in which the resin composition is extruded.

Effect of the Invention

The present invention can provide an interlayer film in which the ultraviolet transmittance has been reduced, resulting in less discoloration.

BRIEF DESCRIPTION OF THE DRAWINGS

[Figure 1] schematically illustrates λ1-λ2 in the present invention.

[Interlayer Film]

The interlayer film of the present invention comprises an ionomer resin and an ultraviolet absorber, wherein the ultraviolet absorber is at least one selected from the group consisting of compounds having a benzotriazole structure represented by the following formula (I) and compounds having a triazine structure.

<Ultraviolet Absorber>

The interlayer film of the present invention includes an ultraviolet absorber. The inclusion of an ultraviolet absorber enhances the ultraviolet shielding properties of the interlayer film.

The ultraviolet absorber is at least one selected from the group consisting of compounds having a benzotriazole structure represented by the following formula (I) and compounds having a triazine structure. The inclusion of this specific ultraviolet absorber will make it easier to prevent the interlayer film from becoming discolored. Although the reason is not fully understood, it appears that the use of an ultraviolet absorber having a specific structure makes it more difficult for the metal ions included in the ionomer resin to become coordinated to the ultraviolet absorber, as a result of which the interlayer film is less likely to become discolored.

[Chemical Formula 5]

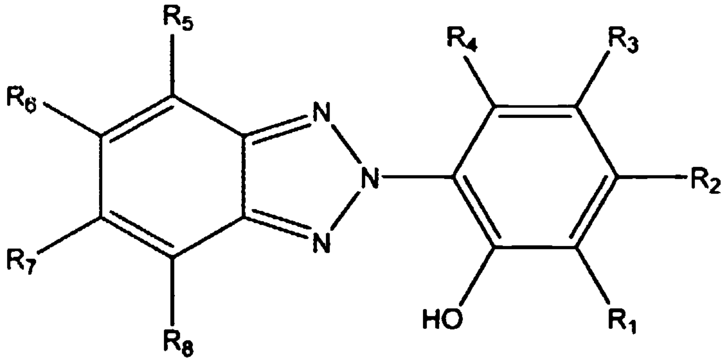

(I)

(in the above formula, $R_1$ is a C4 or higher organic group, and $R_2$ to $R_8$ are each independently a hydrogen atom, a halogen atom, or a C1-20 organic group)

In the above formula (I), $R_1$ is a C4 or higher organic group. As a result, the interlayer film is less likely to become discolored. The reason is not fully understood, but $R_1$ is a C4 or higher organic group that is located in the ortho position of the hydroxyl group in formula (I), which appears to make it more difficult for the ultraviolet absorber to become coordinated to the metal of the ionomer resin, as a result of which the interlayer film is less likely to become discolored.

In the interests of preventing the interlayer film from becoming discolored, $R_1$ is preferably a C4-20 organic group, and more preferably a C4-10 organic group. $R_1$ may include an oxygen atom, nitrogen atom, or sulfur atom, for example, but is preferably a hydrocarbon group.

Specifically, $R_1$ is preferably a C4 or higher hydrocarbon group, more preferably a C4-20 hydrocarbon group, and even more preferably a C4-10 hydrocarbon group.

$R_1$ furthermore preferably comprises a quaternary carbon atom and/or an aromatic ring.

Having this sort of structure appears to make it more difficult for the ultraviolet absorber to become coordinated to the metal of the ionomer resin, as a result of which the interlayer film is less likely to become discolored.

$R_1$ is in particular preferably a group represented by formula (a) or formula (b) below.

[Chemical Formula 6]

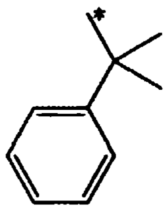

(a)

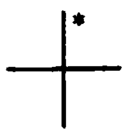

(b)

The asterisk in formula (a) and formula (b) is a bond joined to the aromatic ring shown in formula (I).

$R_2$ to $R_8$ in the above formula (I) are each independently a hydrogen atom, a halogen atom, or a C1-20 organic group. Examples of halogen atoms include fluorine, chlorine, bromine, and iodine, and preferably chlorine. Organic groups may include oxygen, nitrogen, and sulfur atoms, for example, and may be hydrocarbon groups.

$R_2$, $R_4$, $R_5$, $R_6$, $R_7$, and $R_8$ in the above formula (I) are preferably each independently a hydrogen atom, an alkyl group, an aryl group, an alkoxy group, an aryloxy group, an acyloxy group, an alkylamino group, an anilino group, an acylamino group, an alkylsulfonylamino group, an arylsulfonylamino group, an alkylthio group, or an arylthio group, and more preferably a hydrogen atom.

$R_3$ in the above formula (I) is a hydrogen atom or a C1-20 organic group. Organic groups may include oxygen, nitrogen, and sulfur atoms, for example, and may be hydrocarbon groups. In the interest of preventing the interlayer film from becoming discolored, $R_3$ is preferably a C1-10 organic group, and more preferably a C1-10 hydrocarbon group or a C1-10 organic group having an ester structure. The C1-10 hydrocarbon group also preferably comprises a quaternary carbon atom and/or an aromatic ring.

$R_3$ is in particular preferably a group represented by formula (c), formula (d), or formula (e) below.

[Chemical Formula 7]

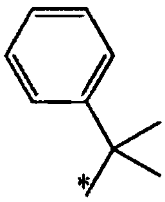

(c)

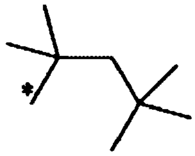

(d)

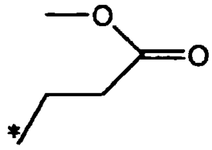

(e)

The asterisk in formula (c), formula (d), and formula (e) is a bond joined to the aromatic ring shown in formula (I).

In the interests of preventing the interlayer film of the present invention from becoming discolored, the compounds having a benzotriazole structure represented by formula (I) are preferably any of compounds represented by formulas (2) to (4) below, and more preferably compounds represented by formula (2) or formula (3).

[Chemical Formula 8]

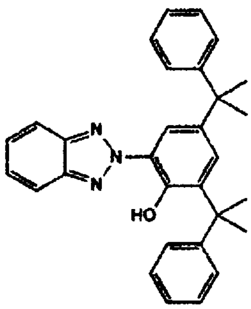

Formula (2)

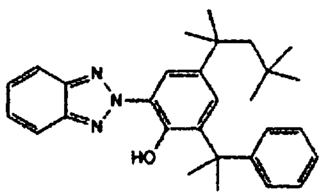

Formula (3)

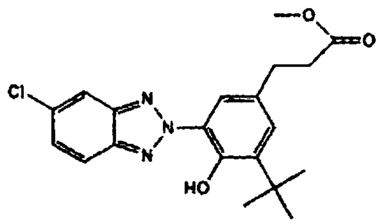

Formula (4)

The types of compounds having a triazine structure are not particularly limited. A triazine structure means an unsaturated six-membered cyclic structure containing three nitrogen atoms, specific examples of which include 1,2,3-triazine, 1,2,4-triazine, and 1,3,5-triazine.

To ensure that the interlayer is less likely to become discolored, the compound having a triazine structure is preferably 2-[4,6-bis(2,4-dimethylphenyl)-1,3,5-triazin-2-yl]-5-(octyloxy)phenol.

The ultraviolet absorber may be a compound having a benzotriazole structure represented by formula (I) and may be a compound having a triazine structure but, in the interest of enhancing the ultraviolet shielding properties of the interlayer film, is preferably a compound having a benzotriazole structure represented by formula (I).

The content of the ultraviolet absorber in the interlayer film is preferably 0.01 part by mass or more, more preferably 0.05 part by mass or more, and even more preferably 0.1 part by mass or more, and is also preferably 3 parts by mass or less, more preferably 2 parts by mass or less, even more preferably 1.5 parts by mass or less, and still more preferably 1 part by mass or less, per 100 parts by mass ionomer resin. An ultraviolet absorber content that is at least the

lower limit will further enhance the ultraviolet shielding properties of the interlayer film. Meanwhile, an ultraviolet absorber content that is no greater than the upper limit will ensure that the interlayer film is less likely to become discolored.

<Ionomer Resin>

The interlayer film of the present invention comprises an ionomer resin. Examples of ionomer resins include ionomer resins of ethylene-unsaturated carboxylic acid-based copolymers. Ionomer resins are typically obtained by neutralizing an ethylene-unsaturated carboxylic acid-based copolymer with metal ions.

Examples of unsaturated carboxylic acids include acrylic acid, methacrylic acid, 2-ethylacrylic acid, crotonic acid, maleic acid, fumaric acid, itaconic acid, maleic anhydride, fumaric anhydride, itaconic anhydride, monomethyl maleate, and monoethyl maleate, among which acrylic acid and methacrylic acid are preferred. The ionomer resin is therefore preferably an ionomer resin of an ethylene-(meth)acrylic acid-based copolymer.

Examples of metal ions include lithium, potassium, sodium, silver, copper, calcium, magnesium, titanium, zinc, aluminum, barium, beryllium, strontium, tin, lead, iron, cobalt, nickel, cadmium, and mercury, among which at least one of magnesium or zinc is preferred. One type of metal ion may be used alone, or combinations of two or more may be used. When the ionomer resin contains at least one of magnesium or zinc, and in particular when it contains magnesium, a suitable cross-linked structure will be formed, making it easier to increase the glass transition temperature and the rigidity of the interlayer film.

On the other hand, the present inventors found that the interlayer film is more likely to become discolored when magnesium is used as the metal ion used in the ionomer. The use of a specific ultraviolet absorber, as in the present invention, will ensure that discoloration is less likely to occur even when an ionomer that is susceptible to discoloration is used.

(Meth)acrylic acid means at least one of methacrylic acid and acrylic acid, which is also true of similar terms below.

Ionomer resins of ethylene-unsaturated carboxylic acid-based copolymers typically contain unsaturated carboxylic acid-derived structural units (A), neutralized unsaturated carboxylic acid-derived structural units (B), and ethylene-derived structural units (C).

Ionomer resins of ethylene-(meth)acrylic acid-based copolymers typically contain (meth)acrylic acid-derived structural units (structural units A), neutralized (meth)acrylic acid-derived structural units (structural units B), and ethylene-derived structural units (C). The structural units (A), (B), and (C) included in the ionomer resin make it easier to increase the rigidity.

The monomers forming structural units (A) are not particularly limited, provided that they are unsaturated carboxylic acids, but are preferably at least one of acrylic acid and methacrylic acid, and are more preferably methacrylic acid in the interest of rigidity and adhesion, for example. Structural units (A) are not neutralized with metal ions.

Structural units (B) are neutralized unsaturated carboxylic acid-derived structural units as noted above, but are preferably at least one of neutralized acrylic acid and methacrylic acid-derived structural units, and more preferably neutralized methacrylic acid-derived structural units. Structural units (B) are preferably neutralized units of structural units (A).

Structural units (B) are structural units in which the hydrogen ions of carboxy groups in unsaturated carboxylic acids have been substituted with metal ions. Specifically, the neutralized unsaturated carboxylic acids in structural units (B) are metal salts of unsaturated carboxylic acids. The metal ions in the metal salts are as described above, but are preferably at least one of magnesium or zinc, and are in particular preferably magnesium.

Structural units (B) thus preferably contain at least one of magnesium or zinc, and in particular preferably contain magnesium.

The total content of structural units (A) and (B) in the ionomer resin is preferably 10 to 25% by mass, based on the total amount of the structural units forming the ionomer resin. Good interlayer film transparency, heat resistance, and mechanical strength, for example, can be achieved when the total content of structural units (A) and (B) is 10% by mass or more. A total content of 25% by mass or less will also allow flexibility, processability, and adhesion, for example, to be enhanced. The total content of structural units (A) and (B) is more preferably 11 to 23% by mass, and even more preferably 12 to 20% by mass.

The total content of structural units (B) in the ionomer resin is preferably 4 to 18% by mass, based on the total amount of the structural units forming the ionomer resin. A structural unit (B) content of 4% by mass or more will increase the degree of cross-linking and make it easier to increase the rigidity of the ionomer resin. A content of 4% by mass or more will furthermore make it easier to increase transparency and heat resistance, for example. A structural unit (B) content of 18% by mass or less will also make it easier to enhance interlayer film flexibility, adhesion, mechanical strength, and processability, for example.

The structural unit (B) content of the ionomer resin is more preferably 6 to 17.5% by mass, even more preferably 7 to 16% by mass, and still more preferably 10 to 14% by mass.

In the interest of easily increasing the impact resistance of the ionomer resin, the content of ethylene-derived structural units (C) is preferably 70% by mass or more, more preferably 75% by mass or more, even more preferably 80% by mass or more, and still more preferably 82% by mass or more, based on the total amount of the structural units forming the ionomer resin. In the interest of transparency, mechanical strength, and formability, the content of ethylene-derived structural units (C) is preferably 90% by mass or less, more preferably 89% by mass or less, even more preferably 88% by mass or less, and still more preferably 85% by mass or less.

The content of structural units (A) in the ionomer resin is not particularly limited, but is preferably 3 to 10% by mass, more preferably 4 to 9% by mass, and even more preferably 8% by mass or less, based on the total amount of the structural units forming the ionomer resin.

The ionomer resin may contain other structural units (referred to below as "other structural units") in addition to structural units (A), (B), and (C). The ionomer resin may therefore be obtained by neutralizing a copolymer of ethylene and an unsaturated carboxylic acid with metal ions, or by neutralizing a copolymer of ethylene, an unsaturated carboxylic acid, and a monomer other than ethylene or an unsaturated carboxylic acid with metal ions.

Examples of such other structural units include alkyl (meth)acrylate-derived structural units (D). The presence of structural units (D) will allow the glass transition temperature (Tg), for example, of the ionomer resin to be adjusted. Examples of alkyl (meth)acrylates include approximately C1-10 alkyl (meth)acrylates, such as methyl (meth)acrylate, ethyl (meth)acrylate, isobutyl (meth)acrylate, n-butyl (meth)acrylate, and 2-ethylhexyl.

In the interest of preventing the glass transition temperature from being lowered more than is needed, the content of alkyl (meth)acrylate-derived structural units (D) is preferably 15% by mass or less, more preferably 8% by mass or less, even more preferably 4.5% by mass or less, and still more preferably 2% by mass or less. The lower the content of structural units (D), the better in terms of increasing the rigidity without lowering the glass transition temperature; the content may be 0% by mass or more, but the ionomer resin preferably contains no structural units (D).

The use of isobutyl (meth)acrylate is commonly preferred as the alkyl (meth)acrylate in ionomer resins, but in the present invention, the ionomer resin contains no, or very few, isobutyl (meth)acrylate-derived structural units. The content of isobutyl (meth)acrylate-derived structural units is thus preferably 15% by mass or less, more preferably 8% by mass or less, even more preferably 4.5% by mass or less, and still more preferably 2% by mass or less. The content of isobutyl (meth)acrylate-derived structural units may also be 0% by mass or more, but the ionomer resin preferably contains no isobutyl (meth)acrylate-derived structural units.

The ionomer resin may also contain structural units other than structural units (A), (B), (C), and (D) as other structural units, and may include, for example, structural units derived from vinyl esters such as vinyl acetate and vinyl propionate.

The degree of neutralization of the ionomer resin in the present invention is 30% or more, for example but, in the interest of higher rigidity, is preferably more than 40%, more preferably 42% or more, even more preferably 45% or more, and still more preferably 50% or more.

Even better rigidity will also be more readily achieved in the present invention by including at least magnesium or zinc (and particularly magnesium) in structural units (B) and by increasing the degree of neutralization.

The degree of neutralization of the ionomer resin is not particularly limited but, in the interest of even better interlayer film flexibility, adhesion, mechanical strength, and processability, for example, is preferably 95% or less, more preferably 90% or less, even more preferably 80% or less, and still more preferably 75% or less.

The degree of neutralization of the ionomer resin refers to the proportion (%) of carboxyl groups that have been neutralized by metal ions out of all of the carboxyl groups included in the ionomer resin.

The degree of neutralization of the ionomer resin can be determined by IR analysis before and after hydrochloric acid treatment. A specific method is noted in the examples described below.

Mass spectrometry and $^1$H-NMR analysis can be used to calculate the content of the constituent units of the ionomer resin based on the integrated intensity ratio of monomer-derived hydrogen peaks, as well as on the degree of neutralization.

In the interest of processability and mechanical strength, for example, the melt mass flow rate (MFR) of the ionomer resin, as determined at a temperature of 190°C under a 2160 g load in accordance with JIS K7210:1999, is 0.01 g/10 min to 150 g/10 min, for example, and is preferably 0.01 g/10 min to 50 g/10 min, more preferably 0.1 g/10 min to 30 g/10 min, and even more preferably 0.1 g/10 min to 10 g/10 min.

The ionomer resin content of the interlayer film is preferably 50% by mass or more, more preferably 70% by mass or more, even more preferably 80% by mass or more, and still more preferably 88% by mass or more, per 100% by mass total interlayer film. Ensuring that the ionomer resin content meets the lower limit noted above will allow the rigidity and interlayer adhesion, for example, of the resulting laminated glass to be enhanced.

The ionomer resin content of the interlayer film may also be 100% by mass or less but, in the interest of ensuring at least a certain additive content, may be 99.99% by mass or less, or may be 99.9% by mass or less, for example, per 100% by mass total interlayer film.

When the ionomer resin in the interlayer film contains other resin components as described below, the ionomer

resin content of the interlayer film may be no more than a certain amount, such as 98% by mass or less or 97% by mass or less.

The method for producing the ionomer resin is not particularly limited, and can be a known method, such as a method in which an ethylene-unsaturated carboxylic acid-based copolymer is obtained by radical polymerization of monomer components at elevated temperature and pressure, and the copolymer is reacted with a metal compound, giving the ionomer resin.

<Other Resin Components>

The interlayer film of the present invention may include other resin components in addition to the ionomer resin. The viscosity of the ionomer resin may be too high when kneaded, for example, resulting in a loss of extrudability, but the inclusion of another resin component in the interlayer film of the present invention will ensure better extrudability. The other resin component(s) may preferably be compatible with the ionomer resin. For the sake of compatibility with the ionomer resin, the other resin component is preferably an ethylene-unsaturated carboxylic acid-based copolymer. Unsaturated carboxylic acids that may be used in the ethylene-unsaturated carboxylic acid-based copolymer here have been described above, among which (meth)acrylic acid is preferred, and methacrylic acid is more preferred.

In the interest of compatibility and extrudability, the other resin is preferably a copolymer of the same type used in the ionomer resin, and the resin used to obtain the ionomer resin without being neutralized with metal ion is even more preferably used.

Thus, when the ionomer resin is an ionomer resin of an ethylene-(meth)acrylic acid-based copolymer, the other resin is preferably an ethylene-(meth)acrylic acid-based copolymer. When the ionomer resin is an ionomer resin of an ethylene-methacrylic acid-based copolymer, the other resin is preferably ethylene-methacrylic acid-based copolymer.

When another resin component is used, the content of the other resin component is 1.5 to 25% by mass per 100% by mass total interlayer film. Ensuring that the content of the other resin component is at least 2% by mass will lower the viscosity of the ionomer resin, resulting in better extrudability. Ensuring that the content is no more than 25% by mass will make it possible to prevent loss of rigidity when another resin component is included. The content of the other resin component is more preferably 2.5 to 18% by mass, and even more preferably 3.5 to 12% by mass, per 100% by mass total interlayer film.

<Silane Coupling Agent>

The interlayer film may contain a silane coupling agent as an additive. The inclusion of a silane coupling agent will make it easier to enhance the adhesion of the interlayer film on substrates and glass, for example.

The inventors discovered that the adhesion of ionomer resin-containing interlayer films on glass is different from that of polyvinyl acetal resin-containing interlayer films. Specifically, it was discovered that ionomer resin-containing interlayer films have lower adhesion on the top surface than on the bottom surface of float glass. Upon further research, it was discovered that a silane coupling agent can be added to an ionomer resin-containing interlayer film to provide good adhesion on any glass surface.

Examples of silane coupling agents include agents that have: functional groups, such as epoxy groups, amino groups, and groups containing polymerizable carbon-carbon double bonds such as vinyl groups and (meth)acryloyl groups; and hydrolyzable groups such as alkoxy groups.

Examples of silane coupling agents having polymerizable carbon-carbon double bonds include vinyltrimethoxysilane, vinyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropylmethyldimethoxysilane, 3-acryloxypropyltrimethoxysilane, 3-acryloxypropylmethyldiethoxysilane, and 3-acryloxypropyltriethoxysilane.

Examples of silane coupling agents having amino groups include N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, and N-(vinylbenzyl)-2-aminoethyl-3-aminopropyltrimethoxysilane hydrochloride. Examples of epoxy group-having silane coupling agents include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane.

The interlayer film may contain a single silane coupling agent or combinations of two or more.

Of these agents, silane coupling agents having amino groups are preferred in the interest of better glass and substrate adhesion, among which silane coupling agents having an ethylenediamine structure are preferred, such as N-2-(aminoethyl)-3-aminopropylmethyldimethoxysilane, N-(2-aminoethyl)-3-aminopropyltrimethoxysilane, and N-2-(aminoethyl)-3-aminopropyltriethoxysilane.

In the interest of higher glass and substrate adhesion as well as an even lower interlayer film yellowness index,

epoxy group-having silane coupling agents are more preferable, among which 3-glycidoxypropylmethyldimethoxysilane and 3-glycidoxypropylmethyldiethoxysilane are even more preferable.

In the interest of better glass and substrate adhesion, the silane coupling agent content of the interlayer film is preferably 0.001 to 5% by mass, more preferably 0.005 to 2% by mass, even more preferably 0.01 to 1% by mass, still more preferably 0.01 to 0.5% by mass, and yet more preferably 0.05 to 0.5% by mass, per 100% by mass total interlayer film.

The upper limit is not particular limited, but the silane coupling agent content is preferably no more than 0.5% by mass, and more preferably no more than 0.2% by mass, per 100% by mass total interlayer film.

<Other Additives>

At least one of antioxidants and other known additives may be included, in addition to the above ultraviolet absorbers and silane coupling agents, as additives included in the interlayer film.

Examples of antioxidants include phenolic compounds, phosphate compounds, and sulfur-based compounds. Antioxidants can prevent the interlayer film from oxidizing and deteriorating, resulting in better durability.

Antioxidants may be used alone or in combinations of two or more.

Examples of other additives that may be included in addition to the above additives in the interlayer film of the present invention include plasticizers, light stabilizers, antistatic agents, surfactants, colorants, foaming agents, lubricants, crystal nucleating agents, crystallization accelerators, crystallization retarders, catalyst deactivators, heat absorbers, heat reflectors, heat dissipation agents, inorganic fillers, organic fillers, impact modifiers, slip agents, cross-linking agents, cross-linking aids, tackifiers, processing aids, mold release agents, hydrolysis inhibitors, antiblocking agents, antifog agents, flame retardants, flame retardant aids, light diffusing agents, antibacterial agents, antifungal agents, and dispersants.

<Difference between λ1 and λ2 (λ1-λ2)>

In the interlayer film of the present invention, the difference between wavelength λ1 (nm) and wavelength λ2 (nm) (λ1-λ2) described below is preferably 20 nm or less. Wavelength λ1 is the smallest wavelength (nm) at which the increase in transmittance (%) relative to the increase in wavelength (nm) is no more than 1 in the 300 to 460 nm wavelength range, with the light transmittance of 10% or more, as determined by transmittance analysis of laminated glass (comprising an interlayer film interposed between two sheets of 2.5 mm thick clear glass).

Wavelength λ2 is the smallest wavelength (nm) at which the increase in transmittance (%) relative to the increase in wavelength (nm) is no more than 1 in the 300 to 460 nm wavelength range, with the light transmittance of 10% or more, as determined by transmittance analysis at an optical path length L (mm) (per the following criteria) in a solution having an ultraviolet absorber concentration (percent by mass) that is the same as the ultraviolet absorber concentration (percent by mass) in the interlayer film.

The optical path length L is 1 mm when the interlayer film thickness is greater than 0 mm and less than 1.5 mm, the optical path length L is 2 mm when the interlayer film thickness is 1.5 mm to less than 2.5 mm, the optical path length L is 3 mm when the interlayer film thickness is 2.5 mm to less than 3.5 mm, and the optical path length L is the thickness (mm) of the interlayer film rounded off to the first decimal place when the interlayer film thickness is 3.5 mm or more.

In the present invention, the difference between wavelength λ1 and wavelength λ2 (λ1-λ2) is preferably 20 nm or less. A difference of 20 nm or less between λ1 and λ2 will ensure that the interlayer film is less likely to become discolored, resulting in a more attractive appearance.

In the interest of further preventing the interlayer film from becoming discolored, the difference between λ1 and λ2 is preferably 15 nm or less, and more preferably 10 nm or less. The lower limit of the difference between λ1 and λ2 is not particularly limited, but is preferably 0 nm. The difference between λ1 and λ2 can be adjusted based on the type and amount of the ultraviolet absorber and ionomer resin that are used.

It is surmised that keeping the difference between λ1 and λ2 to no more than a certain level can ensure that the interlayer film is less likely to become discolored for the following reasons.

Figure 1 schematically shows a transmittance curve (dashed line) that was obtained when the transmittance of laminated glass having an interlayer film was analyzed to calculate λ1, as well as a transmittance curve (solid line) that was obtained when the transmittance of a solution was analyzed to calculate λ2.

The interlayer film includes an ionomer resin and an ultraviolet absorber, whereas the solution contains the same concentration of ultraviolet absorber as the interlayer film but does not contain any ionomer resin. The interlayer film transmittance curve (dotted line) has shifted to a longer wavelength than the solution transmittance curve (solid line). This is presumably due to the fact that metal ions included in the ionomer resin in the interlayer film are coordinated to the ultraviolet absorber. It is believed that interlayer film discoloration is caused by the coordination of such metal ions to the ultraviolet absorber. It is believed that the interlayer film can thus be made less likely to become discolored when there is less of a shift to the longer wavelength side, specifically, when the difference between λ1 and λ2 is kept at or below a certain

value.

λ1 is preferably 400 nm to 430 nm. Keeping λ1 in this range will ensure that the interlayer film is less likely to become yellow. In that respect, λ1 is more preferably 410 nm to 430 nm, and even more preferably 415 nm to 425 nm.

In the analysis of the transmittance of laminated glass having an interlayer film, the transmittance at wavelength 380 nm is preferably 10% or less. A light transmittance of 10% or less at wavelength 380 nm will result in an interlayer film that has better ultraviolet shielding performance. The light transmittance at wavelength 380 nm is more preferably 5% or less, even more preferably 4.5% or less, still more preferably 4.0% or less, and yet even more preferably 2.0% or less. The lower limit of the light transmittance at wavelength 380 nm is 0%.

In the analysis of the transmittance of laminated glass having an interlayer film, the transmittance at wavelength 420 nm is preferably 80% or more. A light transmittance of 80% or more at wavelength 420 nm will result in greater interlayer film transparency and less yellowing. The light transmittance at wavelength 420 nm is more preferably 82% or more, and even more preferably 84% or more. The upper limit of the light transmittance at wavelength 420 nm is 100%.

In the analysis of the transmittance of the laminated glass having an interlayer film, the light transmittance at wavelength λ1 is preferably 80% or more. The light transmittance at wavelength λ1 is more preferably 82% or more, and even more preferably 84% or more. The upper limit of the light transmittance at wavelength λ1 is 100%.

In the analysis of the transmittance of a solution containing an ultraviolet absorber, the light transmittance at wavelength λ2 is preferably 80% or more. The light transmittance at wavelength λ1 is more preferably 82% or more, and even more preferably 84% or more. The upper limit of the light transmittance at wavelength λ1 is 100%.

The method for calculating λ1 and λ2 is described below. λ1 is the smallest wavelength (nm) at which the increase in transmittance (%) relative to the increase in wavelength (nm) is no more than 1 in the 300 to 460 nm wavelength range, with the light transmittance of 10% or more, as determined by transmittance analysis of laminated glass (comprising an interlayer film sandwiched between two sheets of 2.5 mm thick clear glass).

Here, the range where the light transmittance is 10% or more is the range, on the long wavelength side (right side), from point P on the interlayer film transmittance curve (dotted line) in Figure 1. The increase in transmittance (%) relative to the increase in wavelength (nm) corresponds to the slope of the transmittance curve (dotted line), and λ1 indicates the smallest wavelength where the slope is 1 or less.

λ2 is determined in a solution having an ultraviolet absorber concentration (percent by mass) that is the same as the ultraviolet absorber concentration (percent by mass) in the interlayer film. λ2 is the smallest wavelength (nm) at which the increase in transmittance (%) relative to the increase in wavelength (nm) is no more than 1 in the 300 to 460 nm wavelength range, with the light transmittance of 10% or more, as determined by transmittance analysis at an optical path length L.

Here, the range where the light transmittance is 10% or more is the range, on the long wavelength side (right side), from point Q on the solution transmittance curve (solid line) in Figure 1. The increase in transmittance (%) relative to the increase in wavelength (nm) corresponds to the slope of the transmittance curve (dotted line), and λ2 indicates the smallest wavelength where the slope is 1 or less.

The smallest wavelength at which the slope is 1 or less can be determined in the following manner.

The transmittance curve is commonly obtained by scanning, at equal intervals (such as 5 nm intervals), from the shorter to longer wavelengths using a spectrophotometer, and then plotting the transmittance at each measurement point. The slope of the transmittance curve is calculated as (Tm-Tn)/(λm-λn), where λn (nm) and λm (nm) indicate neighboring measurement points, Tn (%) indicates the transmittance at λn (nm), and Tm (%) indicates the transmittance at λm (nm). The slope is thus calculated sequentially, from the shorter to the longer wavelength side, and the points where the slope first becomes 1 or less are identified. If the slope first becomes 1 or less at points λn (nm) and λm (nm), the wavelength midway between λn (nm) and λm (nm) is designated λ1 or λ2.

The solution that is used to determine λ2 can be prepared by dissolving an ultraviolet absorber in a solvent. The solvent is not particularly limited, provided that it is capable of dissolving the ultraviolet absorber, and a variety of organic solvents and plasticizers, for example, can be used, but tetrahydrofuran or triethylene glycol-di-2-ethylhexanoate are preferably used.

The optical path length L when determining λ2 must also be close to the thickness of the interlayer film. Specifically, the optical path length L is 1 mm when the interlayer film thickness is greater than 0 mm and less than 1.5 mm, the optical path length L is 2 mm when the interlayer film thickness is 1.5 mm to less than 2.5 mm, the optical path length L is 3 mm when the interlayer film thickness is 2.5 mm to less than 3.5 mm, and the optical path length L is the thickness of the interlayer film rounded off to the first decimal place when the interlayer film thickness is 3.5 mm or more.

The optical path length L can be adjusted depending on the type of cell in which the solution is introduced when determining λ2.

<Yellowness Index (YI)>

In the interest of a more attractive appearance, the yellowness index (YI) of the interlayer film of the present

invention is preferably 2.5 or less, more preferably 2 or less, and even more preferably 1.5 or less.

In the interest of a more attractive appearance, the yellowness index per unit thickness (YI/d) of the interlayer film of the present invention is preferably 2.5 or less, more preferably 2 or less, and even more preferably 1.5 or less. The yellowness index per unit thickness (YI/d) of the interlayer film is the value obtained by dividing the yellowness index (YI) by the thickness (mm) of the interlayer film.

The yellowness index (YI) is determined using a spectrophotometer in accordance with JIS K7105.

(Thickness)

The thickness of the interlayer film is not particularly limited, but is preferably 0.1 mm or more, more preferably 0.2 mm or more, even more preferably 0.5 mm or more, and still more preferably 0.6 mm or more, and is preferably 4 mm or less, more preferably 3.0 mm or less, even more preferably 2.5 mm or less, still more preferably 1.6 mm or less, and yet even more preferably 1.0 mm or less. An interlayer film thickness that is at least the lower limit can ensure, for example, better interlayer film rigidity, adhesion, and penetration resistance when the interlayer film is used in laminated glass. An interlayer film thickness that is no more than the upper limit will make it easier to ensure interlayer film transparency.

(Width)

The interlayer film of the present invention is preferably at least 1 m wide. An interlayer film width of at least 1 m will be suitable for use as large-scale laminated glass or as laminated glass for building structures, for example. Although a width of 1 m or more may make industrial mass production more difficult, the inclusion, for example, of a resin other than an ionomer resin, such as an ethylene-methacrylic acid-based copolymer, in the interlayer film, will also make mass production more manageable. The interlayer film is more preferably at least 2 m wide. In the interest of better productivity, the interlayer film width is also preferably, but not particularly limited to, no more than 5 m, and even more preferably no more than 4 m.

The interlayer film of the present invention is also preferably an extrusion molded product obtained via extrusion molding as described below. Being an extrusion molded product will make it easier for even large-scale interlayer films that are at least 1 m wide as described above to be mass produced for industrial purposes. Although the increased viscosity of extrusion molded products may result in less productivity, the inclusion, for example, of a resin other than an ionomer resin, such as an ethylene-methacrylic acid-based copolymer, in the interlayer film can lead to better productivity.

The interlayer film of the present invention is preferably composed of a single-layer film consisting of a single layer. The layer forming the single-layer film may consist of a resin composition having the composition noted above. Specifically, the layer forming the single-layer film may preferably consist of a resin composition that contains an ionomer resin and an ultraviolet absorber, and that contains optional additives, as needed.

The interlayer film of the present invention may also be a multi-layered film having two or more layers. Multi-layered films may be such that the composition of the interlayer film as a whole is as described for the interlayer film noted above, but the resin compositions forming the individual layers may preferably have the composition noted for the interlayer film described above. Specifically, the layers forming the multi-layered film may preferably consist of a resin composition that contains an ionomer resin and an ultraviolet absorber, and that contains optional additives, as needed. The compositions of the layers of the multi-layered film may be the same as, or different from, each other.

In the single-layer film or multi-layered film, the ionomer resin content, ultraviolet absorber content, content of other resin components, and additive content of the resin compositions forming the individual layers may be as described above. However, the content of the components described above was based on 100% by mass of the interlayer film, but the content of the components in the resin compositions forming the individual layers is based on 100% by mass of the resin composition rather than 100% by mass of the interlayer film.

[Method for Producing Interlayer Film]

To form the interlayer film, a resin composition for forming the interlayer film may be obtained, and the interlayer film may be formed from the resin composition. The components forming the interlayer film, such as an ionomer resin, an ultraviolet absorber, and additives other than the ultraviolet absorber that are blended, as needed, may be mixed to obtain a resin composition, and the resulting resin composition may be made into a film via extrusion molding, press molding, or roll molding, for example, to obtain the interlayer film. The method for mixing the components to obtain the resin composition is not particularly limited, but is preferably a method in which the components are kneaded using an extruder. In cases where the interlayer film consists of a plurality of layers, the resin compositions for forming the individual layers may be prepared, and the resulting resin compositions may be made into films by extrusion molding, press molding, or roll molding, for example, to form the individual layers, which may be laminated to obtain the interlayer film. In cases such as these, extrusion molding may be effected via co-extrusion.

The interlayer film is preferably formed via extrusion molding in the above process. Extrusion molding will allow wide interlayer films to be efficiently produced.

In one embodiment, the interlayer film of the present invention may be produced using what is referred to as a masterbatch. A masterbatch is a mixture obtained by mixing additives with resin components (sometimes referred to below as mixture (A)), where an ionomer resin and at least one resin component other than ionomer resins can be used as a resin component. The resin component other than an ionomer resin is preferably another resin component noted above, and more preferably an ethylene/(meth)acrylic acid-based copolymer. The use of a masterbatch will allow the additives to be readily mixed with the ionomer resin. The inclusion of the other resin component noted above, such as an ethylene-(meth)acrylic acid-based copolymer, in the mixture (A) will effectively lower the viscosity of the resin composition, thus allowing the resin composition to be readily kneaded in an extruder, for example.

The additives that are included in the mixture (A) preferably include an ultraviolet absorber, and may also include a silane coupling agent or other additive.

The mixture (A) is not limited to any particular form but is typically in the form of particles, such as pellets.

When a masterbatch is used, the interlayer film is preferably formed via extrusion molding. Thus, in a preferred embodiment, the method for producing the interlayer film may comprise: a step (1) in which a mixture of an ionomer resin, an ultraviolet absorber, and an ethylene-(meth)acrylic acid-based copolymer is kneaded to obtain a resin composition; and a step (2) in which the resulting resin composition is extrusion molded.

In step (1), the proportion in which the mixture (A) is mixed with the ionomer resin (mixture (A)/ionomer resin) is preferably a mass ratio of 2/98 to 30/70, more preferably 3/97 to 20/70, and even more preferably 4/96 to 15/85. A mixing ratio within the above range will allow the additives and other resin components such as ethylene/(meth)acrylic acid-based copolymer to be blended in suitable amounts in the resin composition.

The total content of additives in mixture (A) is preferably 1 to 20% by mass, and more preferably 2 to 15% by mass, based on the total amount of mixture (A).

Ensuring that the total content of additives in mixture (A) is at least the lower limit noted above will allow a suitable amount of additives to be blended with the resin composition while preventing the other resin components such as ethylene-(meth)acrylic acid copolymer from being mixed with the resin composition more than is necessary. Ensuring that the content of the additives in mixture (A) is no greater than the above upper limit will allow the additives to be suitably dispersed in mixture (A).

The interlayer film of the present invention is preferably used while disposed between a pair of substrates, and is more preferably used in a laminate, as described below. The interlayer film may also be used to bond the pair of substrates. The interlayer film is in particular preferably a laminated glass interlayer film for use in laminated glass.

The interlayer film can be used for applications other than laminates, and can be used, for example, in a variety of encapsulating materials, specifically, encapsulating materials for photovoltaic solar cells.

<Resin Composition>

The present invention can provide a resin composition comprising an ionomer resin and an ultraviolet absorber, wherein the ultraviolet absorber is at least one selected from the group consisting of compounds having a benzotriazole structure represented by the above formula (I) and compounds having a triazine structure. The above resin composition is also preferably obtained by kneading a mixture of an ionomer resin, an ultraviolet absorber, and an ethylene-(meth)acrylic acid-based copolymer. The interlayer film obtained from the resin composition has ultraviolet light blocking properties and is less likely to become discolored.

The resin composition may also comprise other resin components and additives other than the ultraviolet absorber, as needed. The ionomer resin content, ultraviolet absorber content, content of other resin components, and additive content of the resin composition may be as described above. However, the content of the components described above was based on 100% by mass of the interlayer film, but the content of the components in the resin composition is based on 100% by mass of the resin composition rather than 100% by mass of the interlayer film.

<Laminate>

The laminate according to the present invention comprises the above interlayer film and a pair of substrates, wherein the interlayer film is disposed between the pair of substrates. The pair of substrates in the laminate may be bonded by means of the interlayer film. One interlayer film or a plurality of interlayer films may be disposed between the pair of glass members in the laminate. The plurality of interlayer films may be integrated between the substrates so that the pair of substrates is bonded by means of the integrated plurality of interlayer films. When used in building structures, for example, the interlayer film disposed between the substrates in the laminate may need to be thick, and the use of a plurality of interlayer films will allow the interlayer film disposed between the substrates in the laminate to be made relatively thicker.

The pair of substrates used in the laminate of the present invention are preferably selected from the group

consisting of organic material substrates and inorganic material substrates.

Examples of organic material substrates include organic resin sheets and resin films. Resin films used as substrates may be referred to below as resin films for substrates. Organic resin sheets are also referred to as organic glass sheets. Examples of organic resin sheets include, but are not particularly limited to, polycarbonate sheets, (meth)acrylic sheets such as polymethyl methacrylate sheets, acrylonitrile-styrene copolymer sheets, acrylonitrile-butadiene styrene copolymer sheets, polyester sheets such as polyethylene terephthalate sheets, fluororesin sheets, polyvinyl chloride sheets, chlorinated polyvinyl chloride sheets, polypropylene sheets, polystyrene sheets, polysulfone sheets, epoxy resin sheets, phenolic resin sheets, unsaturated polyester resin sheets, polyimide resin sheets, and other such organic glass sheets. Organic resin sheets may be surface treated, for example, as appropriate.

Of the examples noted above, polycarbonate sheets are preferred for their exceptional transparency and impact resistance, and (meth)acrylic sheets are preferred or their high transparency and their exceptional weatherability and mechanical strength; of these, polycarbonate sheets are more preferred.

The thickness of organic resin sheets is not particularly limited, but is preferably 0.1 mm or more, and more preferably 0.4 mm or more, and is also preferably 5.0 mm or less, and more preferably 3.0 mm or less.

Examples of resin films for substrates include, but are not particularly limited to, polyester resin films such as (meth)acrylic resin films, polycarbonate films, polyethylene terephthalate (PET) films, and polyethylene naphthalate (PEN) films; polyolefin resin films such as polyethylene films and polypropylene films; and cyclic polyolefin (COP) films, triacetyl cellulose (TAC) films, polyethersulfone (PES) resin films, and polyimide resin films. Of these, PET films are preferred. A surface layer consisting of a hard coat layer, for example, that is made of (meth)acrylic resin or the like, may also be provided on the surface of resin films for substrates. Resin films for substrates may consist of a single layer, or two or more laminated layers.

Organic material substrates may also be functional films that include the above resin films for substrates. Polarizing films (polarizing plates) are preferred examples of functional films.

The thickness of resin films or functional films for the substrates in the laminate is not particularly limited, but is preferably 30 μm or more, and more preferably 50 μm or more, and is also preferably 500 μm or less, and more preferably 450 μm or less.

Although not clearly distinguishable from each other, organic resin sheets are relatively thick, not very flexible, and usually cannot be bent, whereas resin films are relatively thin and usually can be bent.

Of the above, the organic material substrate is preferably any of polarizing films (polarizing plates), PET films, (meth)acrylic sheets, and polycarbonate sheets.

Examples of inorganic material substrates include inorganic glass sheets. Examples of inorganic glass sheets include, but are not particularly limited to, clear glass, clear float glass, glass float sheets, tempered glass, colored glass, polished glass sheets, patterned glass, wire-reinforced glass sheets, wired glass sheets, UV glass sheets, IR reflective glass sheets, IR absorbing glass sheets, green glass and other such glass sheets. Inorganic glass may be surface treated, for example. The inorganic glass thickness is not particularly limited, but is preferably 0.1 mm or more, more preferably 0.3 mm or more, and even more preferably 0.5 mm or more, and is also preferably 5.0 mm or less, and more preferably 3.0 mm or less.

Both of the pair of substrates here are preferably glass. In which case, the laminate serves as laminated glass. Specifically, the laminated glass of the present invention comprises a pair of glass members, and an interlayer film disposed between the pair of glass members. The glass members may be inorganic glass sheets or organic glass sheets. The two glass members may be made of the same or different materials. For example, one may be made of inorganic glass, and the other may be made of organic glass, but both glass members are preferably made of either inorganic glass or organic glass.

The thickness of the glass members is not particularly limited, but is preferably 0.5 mm to 5 mm, and more preferably 0.7 mm to 3 mm.

As noted above, one interlayer film or a plurality of interlayer films may be disposed between the pair of glass members.

The organic material substrate or inorganic material substrate may be provided with electrodes or sensors, for example, as appropriate. The electrodes are composed of conductive layers laminated to the substrates noted above.

Examples of sensors include touch sensors. A touch sensor, which is a sensor that senses touch input when a finger, touch pen, or other object comes near, or into contact with, a substrate, is composed of a conductive layer laminated to a substrate. Touch sensors sense touch input as a result of electrical changes in, for example, capacitance, current, or voltage, which are produced in the conductive layer when a finger, touch pen, or other object comes near, or into contact with, the substrate. The conductive layer is not particularly limited, and any conventionally known electrode material that is transparent can be used, such as indium tin oxide (ITO) conductive films, tin oxide conductive films, zinc oxide conductive films, and polymer conductive films.

Organic material substrates (particularly films) onto which a conductive layer, such as an electrode or a sensor, has been laminated may have a hard coat layer, as noted above, formed on the surface opposite the surface on which the

conductive layer has been formed.

The laminate can also be used to make displays. For example, a laminate comprising a display element, an interlayer film, and a surface protection panel can be produced to make a display. The display may furthermore be provided with a touch panel to make a display equipped with a touch panel. An example of a touch panel display is a laminate that is equipped with a display element, an interlayer film, a touch panel, an interlayer film, and a surface protection panel, in that order. The various components are bonded and joined by means of the interlayer films.

The surface protection panel is preferably either an organic resin sheet or an inorganic glass sheet, and preferably an inorganic glass sheet. The surface protection panel may be a one-glass solution (OGS) panel, which may be provided with a sensor such as a touch sensor. The surface protection panel may thus be composed of, for example, a sensor-mounted inorganic glass sheet.

Examples of display elements include organic EL display elements and liquid crystal display elements. The display element preferably has a polarizing plate (polarizing film) on the surface. Polarizing plates (polarizing films) commonly have a structure in which protective films such as polyvinyl alcohol resin films are provided on both sides of the polarizer. The protective films are composed of the resin films for substrates noted above, and are preferably any of PET films, COP films, or TAC films. A hard coat layer consisting of, for example, a (meth)acrylic-based resin may also be provided, as a surface layer of the substrate, on the surface of the protective film.

Touch panels may be composed of any of touch sensor-mounted inorganic glass, organic resin sheets, or resin films for substrates, but preferably inorganic glass or a resin film for a substrate on which a touch sensor has been mounted.

Two or more layers of inorganic glass, organic resin sheets, or resin films for substrates in touch panels may also be laminated into a multi-layered structure. In which case, a touch sensor may be mounted on any of the inorganic glass, organic resin sheet, or resin film for a substrate in the touch panel. A protective film consisting of a resin film for a substrate may also be disposed on either the outermost surface of the front or back side of the touch panel. The surface of the touch panel that is bonded to the interlayer film is thus the inorganic glass, organic glass, or resin film for a substrate.

The laminate can also be used to produce a photovoltaic solar cell. Examples of photovoltaic solar cells comprising the laminate include photovoltaic solar cells in which laminates are provided with power generating cells. The power generating cells are provided on the surface or side of the laminates, and have the function of converting light into electricity.

Specific examples of power generating cells include: power generating cells in which silicon-based semiconductors such as single crystal silicon, polycrystalline silicon, and amorphous silicon are used in the photoelectric conversion layers; power generating cells in which compound semiconductors such as CuInSe-based, Cu(In,Ga)Se-based, Ag(In,Ga)Se-based, CuInS-based, Cu(In,Ga)S-based, and Ag(In,Ga)S-based compounds or solid solutions thereof, CIS-based, CIGS-based, GaAs-based, and CdTe-based compounds are used as photoelectric conversion layers; and organic power generating cells in which organic materials such as organic dyes are used in the photoelectric conversion layers.

(Method for Producing Laminate and Laminated Glass)

The laminate of the present invention can be produced, for example, by preparing a pair of substrates and one or more interlayer films, placing the one interlayer film or plurality of laminated interlayer films between the pair of substrates, and pressure bonding them together. The pressure bonding is not particularly limited but is preferably heated pressure bonding. Preliminary bonding at a relatively low pressure and temperature may be followed by main bonding at a pressure and/or temperature higher than in the preliminary bonding. In cases where a plurality of interlayer films are disposed between the pair of substrates, the plurality of interlayer films may be integrated when pressure bonded.

Also, when the laminate is laminated glass, one or more interlayer films are interposed between the two glass members, and the air remaining between the two glass members and interlayer film is removed when the laminated glass is, for example, passed through a pressure roll, or placed in a rubber bag from which the air is vacuum suctioned off. A laminated intermediate is then obtained via preliminary bonding at approximately 70 to 110°C. The laminated intermediate may then be placed in an autoclave or pressed, to effect main bonding via pressure bonding at a temperature of approximately 120 to 150°C and a pressure of 1 to 1.5 MPa. Laminated glass can thus be obtained in this manner. In cases where a plurality of interlayer films are disposed between a pair of glass member, the plurality of interlayer films may preferably be integrated during preliminary and main bonding.

The interlayer film, laminate, and laminated glass of the present invention can be used in a variety of fields, including: electronic devices such as displays; photovoltaic solar cells and encapsulating materials for photovoltaic solar cells; vehicles such as automobiles, railway cars, aircraft, and ships; and a variety of building structures such as buildings, condominiums, detached housing, auditoriums, and gymnasiums. They are preferably used in vehicles and building structures, and more preferably used in building structures.

The laminated glass is preferably used in vehicles and building structures. In vehicle applications, they are preferably used as windows, and preferably any of windshields, rear windows, or side windows in automobiles, for

example.

In building structures, they are preferably used as windows, glass floors, or curtain walls, for example. When used in building structures, laminated glass may be, for example, large-scale and used as structural glazing.

EXAMPLES

The invention is illustrated in greater detail by, but is not limited in any way to, the examples.

The various physical properties were determined and assessed as follows.

[Interlayer Film Thickness]

The interlayer film thickness was determined as the average of the thickness measured at 10 points using the "DSX500" microscope by Olympus Corporation.

[Content and Degree of Neutralization of Structural Units]

The percentage by mass of the structural units of ethylene-(meth)acrylic acid-based copolymers and ionomer resins thereof was determined via $^1$H-NMR and IR analysis following the hydrochloric acid treatment described below.

[Hydrochloric Acid Treatment]

To 100 mg samples that had been cryogenically crushed using a JFC-2000 (by Japan Analytical Industry Co., Ltd.) were added 500 μL of ethanol and 1 mL of hydrochloric acid, and the contents were stirred at for 48 hours at 60°C. The samples were then washed 3 times with ultrapure water to washout the hydrochloric acid, and were then heated until dry.

[Degree of Neutralization]

The degree of neutralization was determined via IR analysis of samples before and after hydrochloric acid treatment. The degree of neutralization was calculated, using the following formula, from the carboxylic acid peak height at 1700 cm$^{-1}$, based on the methylene peak height at 1460 cm$^{-1}$ before and after hydrochloric acid treatment. In the following formula, the denominator is the peak height at 1700 cm$^{-1}$/peak height at 1460 cm$^{-1}$ of samples following hydrochloric acid treatment, and the numerator is the peak height at 1700 cm$^{-1}$/peak height at 1460 cm$^{-1}$ of samples before hydrochloric acid treatment.

[Mathematical Formula 1]

$$\text{Degree of neutralization} = 100 \times \left( 1 - \frac{1700\ \text{cm}^{-1}/1460\ \text{cm}^{-1}\ \text{before hydrochloric acid treatment}}{1700\ \text{cm}^{-1}/1460\ \text{cm}^{-1}\ \text{following hydrochloric acid treatment}} \right)$$

[$^1$H-NMR Analysis]

Hydrochloric acid-treated samples were dissolved to a concentration of about 1 to 3% by mass in solvent (tetrachloroethane:dimethyl sulfoxide=5:2) to prepare solution for analysis. The solution was used for $^1$H-NMR analysis (device: AVANCE 400 (PRODIGY); spectrometer: AVANCE III HD). Conditions of analysis (integration count: 8; temperature: 120°C). In the analysis, the standard integral value of H derived from the methyl group of methacrylic acid was 3.00. During the analysis, the total percent by mass of structural units (A) and (B) and the content (percent by mass) of ethylene-derived structural units (C) were calculated based on the integrated intensity ratio of all methylene-derived H peaks at 1.15-1.62 ppm. The content of structural units (A) and (B) were also each calculated based on the degree of neutralization.

[Yellowness Index (YI)]

The yellowness index (YI) of the laminated glass obtained in the examples was analyzed using a spectrophotometer ("U-4100," by Hitachi High-Tech Corporation) based on the transmittance method in accordance with JIS K7105.

[λ1-λ2]

(1) Preparation of Laminated Glass

Two sheets of JIS R3202 (2011)-compliant clear glass (5 cm long x 5 cm wide x 2.5 mm thick; visible light transmittance: 90.4%; by Central Glass Co., Ltd.) and 5 cm x 5 cm interlayer films produced in the examples and comparative examples were readied, and the interlayer films were each interposed between the two sheets of clear glass to obtain laminates. The laminates were placed in rubber bags, which were de-aerated for 20 minutes (vacuum: 0.08 MPa), and the de-aerated samples were then transferred to an oven and were vacuum-pressed by being held for another 30 minutes at 90°C, thereby effecting preliminary pressure bonding. The preliminarily pressure bonded laminates were pressure bonded for 20 minutes in an autoclave at a temperature of 140°C and a pressure of 1.3 MPa, giving laminated glass having a glass sheet/interlayer film/glass sheet structure.

(2) λ1 (nm) Analysis

The laminated glass samples produced in the manner noted above were analyzed using a spectrophotometer ("U-4100," by Hitachi High-Tech Corporation) to determine the transmittance in the 300 to 460 nm wavelength range.

The smallest wavelength λ1 (nm) at which the increase in transmittance (%) relative to the increase in wavelength (nm) was no more than 1, in the range where the light transmittance was at least 10%, was determined.

Specifically, the slope between adjacent measurement points (increase in transmittance/increase in wavelength), beginning from the short wavelength side, in the range where the light transmittance was 10% or more, was calculated sequentially, and the points where the slope first became 1 or less were identified. λ1 (nm) is the wavelength at the point midway between λn (nm) and λm (nm), where λn (nm) and λm (nm) represent the adjacent measurement points at the point where the slope first became 1 or less.

(3) λ2 (nm) Analysis

Solutions of the ultraviolet absorbers used in the examples and comparative examples were prepared, where the ultraviolet absorber concentration was the same as in the interlayer films. Specifically, solutions were prepared by dissolving the ultraviolet absorbers in either THF or triethylene glycol bis(2-ethylhexanoate)

(3GO).

The solutions prepared above were introduced into cells having an optical path length of 1 mm, and the transmittance in the 300 to 460 nm wavelength range was determined using a spectrophotometer ("U-4100," by Hitachi High-Tech Corporation).

The smallest wavelength λ2 (nm) at which the increase in transmittance (%) relative to the increase in wavelength (nm) was no more than 1, in the range where the light transmittance was at least 10%, was determined.

Specifically, the slope between adjacent measurement points (increase in transmittance/increase in wavelength), beginning from the short wavelength side, in the range where the light transmittance was 10% or more, was calculated sequentially, and the points where the slope first became 1 or less were identified. λ2 (nm) is the wavelength at the point midway between λn (nm) and λm (nm), where λn (nm) and λm (nm) represent the adjacent measurement points at the point where the slope first became 1 or less.

[Transmittance at Wavelengths 380 nm and 420 nm]

Two sheets of JIS R3202 (2011)-compliant clear glass (5 cm long x 5 cm wide x 2.5 mm thick; visible light transmittance: 90.4%, by Central Glass Co., Ltd.) and 5 cm x 5 cm interlayer films produced in the examples and comparative examples were readied, and the interlayer films were each interposed between the two sheets of clear glass to obtain laminates. The laminates were placed in rubber bags, which were de-aerated for 20 minutes (vacuum: 0.08 MPa), and the de-aerated samples were then transferred to an oven and vacuum pressed by being held for another 30 minutes at 90°C, thereby effecting preliminary pressure bonding. The preliminarily pressure bonded laminates were pressure bonded for 20 minutes in an autoclave at a temperature of 140°C and a pressure of 1.3 MPa, giving laminated glass having a glass sheet/interlayer film/glass sheet structure.

The laminated glass samples produced in the manner noted above were analyzed using a spectrophotometer ("U-4100," by Hitachi High-Tech Corporation) to determine the transmittance at wavelengths 380 nm (T380) and 420 nm (T420).

[Assessment of Inhibition of Yellowing]

The interlayer films prepared in the examples and comparative examples were used as samples. The samples were cut into 5 cm squares and were secured to stands, which were set up in the upright position. The ends of the samples were observed from the front by a panel of 10 assessors to assess the yellowness index compared with that of a color chart (yellowness index: 0.5).

The extent to which the yellowing was inhibited was assessed based on the following criteria.

A: Yellowing assessed as greater than the color chart by up to 3 out of 10 assessors.
B: Yellowing assessed as greater than the color chart by 4 to 5 assessors.
C: Yellowing assessed as greater than the color chart by 6 or more out of 10 assessors.

[Adhesion Assessment]

(Production of Laminated Glass)

The interlayer films of Examples 5 to 7 described below were subjected to a pummel test.

The interlayer films of Examples 5 to 7 were each interposed between two sheets of JIS R3202 (2011)-compliant 2.5 mm thick clear glass (300 mm long x 300 mm wide) to obtain laminates.

Top surface-coupled laminates (which were laminated in such a way that the top surface was in contact with the interlayer film) and bottom surface-coupled laminates (which were laminated in such a way that the bottom surface was in contact with the interlayer film) were prepared.

The laminates were placed in rubber bags, which were de-aerated for 20 minutes (vacuum: 0.08 MPa), and the de-aerated samples were then transferred to an oven and vacuum pressed by being held for another 30 minutes at 90°C, thereby effecting preliminary pressure bonding. The preliminarily pressure bonded laminates were pressure bonded for 20 minutes in an autoclave at a temperature of 140°C and a pressure of 1.3 MPa, giving laminated glass having a glass sheet/interlayer film/glass sheet structure.

(Pummel Test)

The resulting laminated glass samples were allowed to stand for 16 hours at a temperature of 23°C±0.6°C. The laminated glass samples were then hit in the center (150 mm long x 150 mm wide) by a hammer (0.45 kg head) to crush the glass into a particle size of 6 mm or less. The other side was also hit with the hammer the same number of times. The extent of exposure of films where some of the glass had peeled off was determined, and the pummel values were determined based on Table 1 below. Two samples of the laminated glass of each of the examples were analyzed, and the mean values were calculated via arithmetic averaging of the four resulting front and back surface pummel values.

Pummel values are values indicating the extent of adhesion between an interlayer film and glass sheets, as determined on the basis of the extent of exposure of films where some of the glass has peeled off, and are defined in Table 1. The higher the pummel value, the higher the interlayer film adhesion.

[Table 1]

Table 1

| Extent of interlayer film exposure (area%) | Pummel value |
|---|---|
| Extent of exposure = 100 | 0 |
| 9 5 < Extent of exposure < 100 | 1 |
| 90 < Extent of exposure ≦ 95 | 2 |
| 85 < Extent of exposure ≦ 90 | 3 |
| 60 < Extent of exposure ≦ 85 | 4 |
| 40 < Extent of exposure ≦ 60 | 5 |
| 20 < Extent of exposure ≦ 40 | 6 |
| 10 < Extent of exposure ≦ 20 | 7 |

(continued)

| Extent of interlayer film exposure (area%) | Pummel value |
|---|---|
| 5 < Extent of exposure ≦ 10 | 8 |
| 2 < Extent of exposure ≦ 5 | 9 |
| Extent of exposure ≦ 2 | 10 |

The following components were used in the examples and comparative examples.

<Ionomer Resin>

Details of ionomer resins are given below.

[Table 2]

Table 2

| | | Ionomer resin I |
|---|---|---|
| Metal | - | Mg |
| Degree of neutralization | % | 70.0 |
| Ethylene-derived (structural units (C)) | wt% | 82.8 |
| Total of structural units (A) and (B) | wt% | 17.2 |
| (Meth)acrylic acid-derived (structural units (A)) | wt% | 5,2 |
| Neutralized product-derived (structural units (B)) | wt% | 12.0 |
| *Ionomer resin 1 is an ionomer resin of an ethylene-(meth)acrylic acid-based copolymer that had been neutralized with magnesium ions. | | |

<Ultraviolet Absorbers>

· Compound having a benzotriazole structure represented by formula (I): "RIASORB UV-234," by Rianlon; the compound represented by formula (2), shown as "UV-234" in Table 3.
· Compound having a benzotriazole structure represented by formula (I): "Tinuvin 640," by BASF; the compound represented by formula (3), shown as "UV-640" in Table 3.
· Compound having a triazine structure: "UV-1164," by Rianlon; 2-[4,6-bis(2,4-dimethylphenyl)-1,3,5-triazin-2-yl]-5-(octyloxy)phenol, shown as "UV-1164" in Table 3.
· Benzophenone-based ultraviolet absorber: "SEESORB 107," by Shipro Kasei Kaisha, Ltd.
• Compound having a benzotriazole structure not corresponding to formula (I): "Tinuvin-P," BASF.

[Example 1]

(Production of Interlayer Film)

100 parts by mass ionomer resin 1 and 0.3 part by mass ultraviolet absorber were kneaded at 170°C and extruded to obtain a 1000 μm thick interlayer film having the composition shown in Table 3. The interlayer film properties were assessed.

[Examples 2 to 4, and Comparative Examples 1 to 3

Interlayer films were produced in the same manner as in Example 1, except that the compositions of the interlayer films were modified as shown in Table 3. The interlayer film properties were assessed.

[Example 5

An interlayer film was produced in the same manner as in Example 1, except that: the type of ultraviolet absorber was changed, as shown in Table 4, and the content was 0.2 part by mass; and the thickness of the interlayer film was changed to 760 μm. The interlayer film properties were assessed.

[Example 6]

An interlayer film was produced in the same manner as in Example 5, except that 3-glycidoxypropylmethyldimethoxysilane (tradename: KBE-402, by Shin-Etsu Silicones Co., Ltd.) was added as the silane coupling agent in an amount of 0.1% by mass per 100% by mass total interlayer film. The interlayer film properties were assessed.

[Example 7]

An interlayer film was produced in the same manner as in Example 5, except that N-2-(aminoethyl)-3-aminopropylmethyldimethoxysilane (tradename: KBM-602, by Shin-Etsu Silicones Co., Ltd.) was added as the silane coupling agent in an amount of 0.1% by mass per 100% by mass total interlayer film. The interlayer film properties were assessed.

The results for Examples 5 to 7 are presented in Table 4.

[Table 3]

Table 3

| | | | | Example 1 | Example 2 | Example 3 | Example 4 | Comparative Example 1 | Comparative Example 2 | Comparative Example 3 |
|---|---|---|---|---|---|---|---|---|---|---|
| Interlayer film | Ionomer resin | Type | – | Ionomer resin 1 | Ionomer resin 1 | Ionomer resin 1 | Ionomer resin 1 | Ionomer resin 1 | Ionomer resin 1 | Ionomer resin 1 |
| | | Number of parts | phr | 100 | 100 | 100 | 100 | 100 | 100 | 100 |
| | | Metal | – | Mg | Mg | Mg | Mg | Mg | Mg | Mg |
| | Ultraviolet absorber | Type | – | Benzotriazole | Benzotriazole | Triazine | Triazine | – | Benzophenone | Benzotriazole |
| | | Brand | – | UV-234 | UV-640 | UV-1164 | UV-1164 | – | SEESORB 107 | Tinuvin P |
| | | Amount added | phr | 0 3 | 0.4 | 0.1 | 0.8 | – | 0.2 | 0.5 |
| Results | Optical | λ1 | nm | 420 | 420 | 420 | 420 | 395 | 450 | 435 |
| | | λ2 | nm | 420 | 410 | 410 | 410 | – | 420 | 400 |
| | | λ1−λ2 | nm | 0.0 | 10 0 | 10.0 | 10.0 | – | 30.0 | 35.0 |
| | | T380 | % | 0.64 | 0.60 | 29.48 | 3.01 | 79.28 | 0 02 | 0.48 |
| | | T420 | % | 80.66 | 84.62 | 84.86 | 84 79 | 84.86 | 11.04 | 74.78 |
| | Thickness | d | μm | 1000 | 1000 | 1000 | 1000 | 1000 | 1000 | 1000 |
| | Yellowness index | YI | – | 1 5 | 1.2 | 0.9 | 0 8 | 0.7 | 18.3 | 2.9 |
| | Yellowness index per unit thickness | YI/d | $mm^{-1}$ | 1 5 | 1 2 | 0.9 | 0.8 | 0.7 | 18.3 | 2.9 |
| | Assessment of inhibition of yellowing | | – | A | A | A | A | A | C | C |

[Table 4]

Table 4

| | | | | | Example 5 | Example 6 | Example 7 |
|---|---|---|---|---|---|---|---|
| Interlayer film | Ionomer resin | | Type | - | Ionomer resin 1 | Ionomer resin 1 | Ionomer resin 1 |
| | | | Number of parts | phr | 100 | 100 | 100 |
| | | | Metal | - | Mg | Mg | Mg |
| | Ultraviolet absorber | | Type | - | Benzotriazole | Benzotriazole | Benzotriazole |
| | | | Brand | - | UV-640 | UV-640 | UV-640 |
| | | | Amount added | phr | 0.2 | 0.2 | 0.2 |
| | SiCp | | Brand | | - | KBE-402 | KBM-802 |
| | | | Amount added | | 0 | 0.1 | 0.1 |
| Results | Optical | λ1 | | nm | 420 | 420 | 420 |
| | | λ2 | | nm | 410 | 410 | 410 |
| | | λ1-λ2 | | nm | 10.0 | 10.0 | 10.0 |
| | | T380 | | % | 4.12 | 5.61 | 4.80 |
| | | T420 | | % | 85.27 | 86.27 | 84.75 |
| | Thickness | d | | μm | 760 | 760 | 760 |
| | Yellowness index | Yi | | - | 1.3 | 0.8 | 1.6 |
| | Yellowness index per unit thickness | YI/d | | mm 1 | 1.7 | 1.1 | 2.1 |
| | Assessment of inhibition of yellowing | | | - | A | A | A |
| | Adhesion | Pummel test | Top surface-coupled laminate | - | 2.25 | 8 | 8.75 |
| | | | Bottom suface-coupled laminate | - | 9 | 9 | 9 |

The interlayer films of the examples included an ultraviolet absorber, had a low T380 (%) value, and had good ultraviolet shielding performance. The interlayer films also included an ionomer resin yet had a low yellowness index (YI) and did not become discolored very much.

The results for Examples 5 to 7 showed that interlayer films in which a silane coupling agent had been added to the ionomer resin provided exceptional adhesion on any glass surface.

The interlayer film of Comparative Example 1 did not include an ultraviolet absorber yet had a low yellowness index, but had a high T380 (%) value and poor ultraviolet shielding performance.

The results showed that the interlayer films of Comparative Examples 2 and 3, which did not include the specific ultraviolet absorber of the present invention, had a high yellowness index (YI) and more readily became discolored than the interlayer films of the examples.

## Claims

1. An interlayer film comprising an ionomer resin and an ultraviolet absorber, wherein the ultraviolet absorber is at least one selected from the group consisting of compounds having a benzotriazole structure represented by the following formula (I) and compounds having a triazine structure:

[Chemical Formula 1]

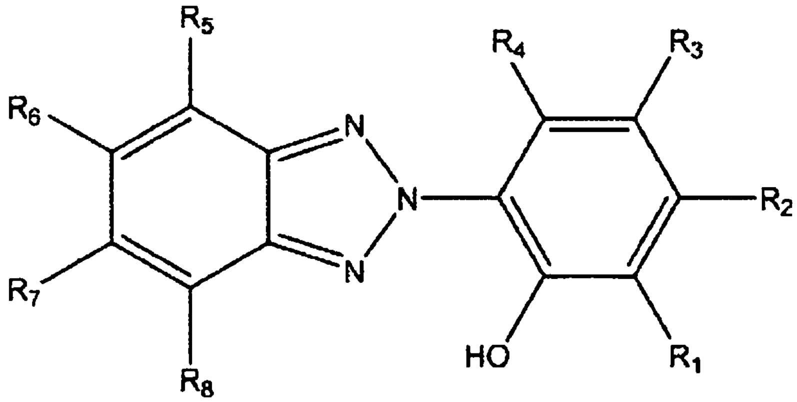

(I)

(in the above formula, $R_1$ is a C4 or higher organic group, and $R_2$ through $R_8$ are each independently a hydrogen atom, a halogen atom, or a C1-20 organic group)

2. The interlayer film as claimed in claim 1, wherein the compounds having a benzotriazole structure are any of compounds represented by formulas (2) through (4) below:

[Chemical Formula 2]

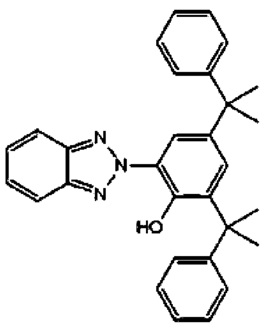

Formula (2)

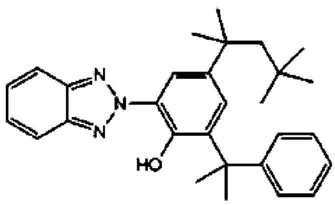

Formula (3)

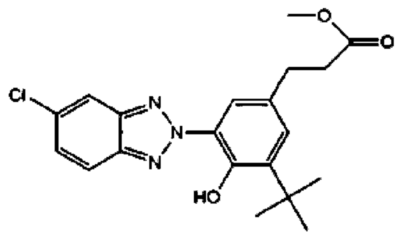

Formula (4)

3. The interlayer film as claimed in claim 1 or 2, wherein the content of the ultraviolet absorber is 0.01 to 1 part by mass per 100 parts by mass ionomer resin.

4. The interlayer film as claimed in claim 1 or 2, wherein the ionomer resin comprises at least one of magnesium or zinc.

5. The interlayer film as claimed in claim 1 or 2, comprising a silane coupling agent.

6. The interlayer film as claimed in claim 5, wherein the silane coupling agent is an epoxy group-having silane coupling agent.

7. The interlayer film as claimed in claim 5, comprising 0.01 to 0.5% by mass silane coupling agent per 100% by mass total interlayer film.

8. A laminate comprising the interlayer film as claimed in claim 1 or 2 and a pair of substrates, wherein the interlayer film is disposed between the pair of substrates.

**9.** The laminate as claimed in claim 8, which is laminated glass.

**10.** The laminate as claimed in claim 8, which is laminated glass for a building structure.

**11.** A method for producing the interlayer film as claimed in claim 1 or 2, comprising:

a step in which a mixture of an ionomer resin, an ultraviolet absorber, and an ethylene-(meth)acrylic acid-based copolymer is kneaded to obtain a resin composition; and
a step in which the resin composition is extruded.

[Figure 1]

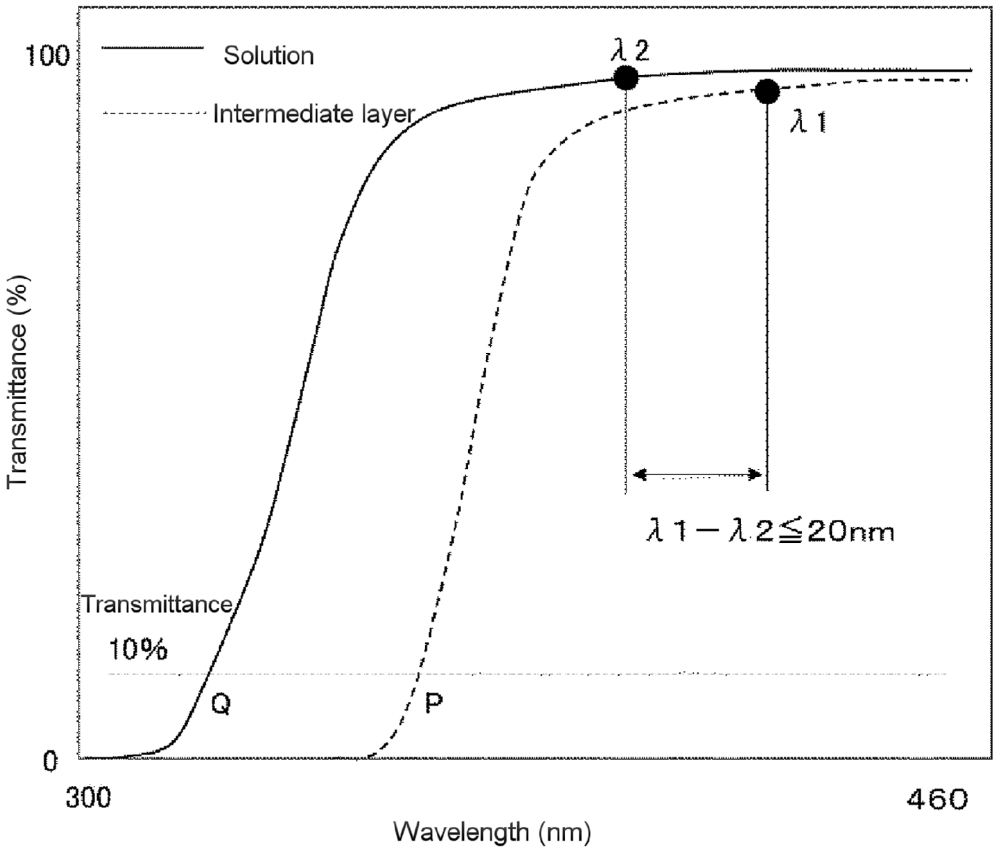
100
Solution
Intermediate layer
λ2
λ1
Transmittance (%)
λ1−λ2≦20nm
Transmittance
10%
Q
P
0
300
460
Wavelength (nm)

**INTERNATIONAL SEARCH REPORT**

International application No.
**PCT/JP2024/034795**

**A. CLASSIFICATION OF SUBJECT MATTER**

***C03C 27/12***(2006.01)i; ***B32B 17/10***(2006.01)i; ***B32B 27/18***(2006.01)i; ***C08J 5/18***(2006.01)i; ***C08K 5/34***(2006.01)i; ***C08K 5/3475***(2006.01)i; ***C08K 5/3492***(2006.01)i; ***C08K 5/54***(2006.01)i; ***C08L 23/08***(2025.01)i; ***C08L 23/26***(2025.01)i; ***C08L 53/02***(2006.01)i; ***C08L 101/02***(2006.01)i
FI: C03C27/12 Z; B32B17/10; B32B27/18 A; C03C27/12 F; C08J5/18 CER; C08K5/34; C08K5/3475; C08K5/3492; C08K5/54; C08L23/08; C08L23/26; C08L53/02; C08L101/02

According to International Patent Classification (IPC) or to both national classification and IPC

**B. FIELDS SEARCHED**

Minimum documentation searched (classification system followed by classification symbols)

C03C27/00-29/00; B32B17/10; B32B27/18; C08J5/18; C08K5/34; C08K5/3475; C08K5/3492; C08K5/54; C08L23/08; C08L23/26; C08L53/02; C08L101/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/079886 A1 (KURARAY CO., LTD.) 29 April 2021 (2021-04-29) paragraphs [0013], [0036], [0041], [0072]-[0073], [0103]-[0108], [0112], table 2 | 1-11 |
| X | WO 2011/142441 A1 (DU PONT MITSUI POLYCHEM CO., LTD.) 17 November 2011 (2011-11-17) paragraphs [0052]-[0053], [0102]-[0107], [0111] | 1, 3-11 |
| Y | | 5-7 |
| X | JP 2019-077582 A (KURARAY CO., LTD.) 23 May 2019 (2019-05-23) paragraphs [0003], [0100], [0143], [0153]-[0154], table 2 | 1, 3-11 |
| Y | | 5-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/034795**

**C. DOCUMENTS CONSIDERED TO BE RELEVANT**

| Category* | Citation of document, with indication, where appropriate, of the relevant passages | Relevant to claim No. |
|---|---|---|
| X<br><br>Y | WO 2019/065837 A1 (SEKISUI CHEMICAL CO., LTD.) 04 April 2019 (2019-04-04)<br>paragraphs [0002], [0072], [0183], [0187], [0201]-[0204] | 1, 3-4, 8-11<br><br>5-7 |
| A | KURARAY GLASS LAMINATING SOLUTIONS SENTRYGLAS(R) IONOPLAST INTERLAYER TECHNICAL MANUAL FOR STRUCTURAL ENGINEERS, 株式会社クラレ, 2014, (KURARAY CO., LTD.)<br>Chemical compound SentryGlas(R) | 1-11 |

Form PCT/ISA/210 (second sheet) (July 2022)

**INTERNATIONAL SEARCH REPORT**
**Information on patent family members**

International application No.
**PCT/JP2024/034795**

| Patent document cited in search report | Publication date (day/month/year) | Patent family member(s) | Publication date (day/month/year) |
|---|---|---|---|
| WO 2021/079886 A1 | 29 April 2021 | JP 2022-172416 A | |
| WO 2011/142441 A1 | 17 November 2011 | US 2013/0056049 A1<br>paragraphs [0073]-[0074], [0146]-[0177]. [0186]-[0187]<br>DE 112011101642 T<br>CN 102905896 A<br>KR 10-1319931 B1<br>JP 11-142441 A1 | |
| JP 2019-077582 A | 23 May 2019 | (Family: none) | |
| WO 2019/065837 A1 | 04 April 2019 | US 2020/0223190 A1<br>paragraphs [0002], [0078], [0188], example 10<br>EP 3689835 A1<br>CN 111132949 A<br>TW 201919885 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021002326 A
- JP 2022120218 A
- JP 2019077582 A